# EUROPEAN PATENT SPECIFICATION

(11) **EP 0 548 328 B1**
(45) Date of publication and mention of the grant of the patent: **18.12.1996**
(21) Application number: 92915027.4
(22) Date of filing: 09.07.1992
(51) Int. Cl.: G01B 7/00, G01B 5/00, G01B 3/00

(54) **TOUCH PROBE**
Tastkopf
SONDE DE CONTACT

(30) Priority: 11.07.1991 GB 9114945
(43) Date of publication of application: 30.06.1993
(73) Proprietor: Renishaw Metrology Limited, Wotton-Under-Edge, Gloucestershire GL12 8JR (GB)
(72) Inventor: McMURTRY, David, Roberts 20 Tabernacle Road, Gloucestershire GL12 7EF (GB); HAJDUKIEWICZ, Peter 49 Bradley Street, Gloucestershire GL12 7AR (GB)
(74) Representative: Jones, Bruce Graeme Roland
(86) International application number: GB9201244
(87) International publication number: WO9301466

(56) References cited:
- EP-A- 0 243 766
- EP-A- 0 304 881
- EP-A- 0 406 782
- EP-A- 0 426 492
- DE-A- 3 811 851
- GB-A- 2 163 554

## Description

### BACKGROUND OF THE INVENTION

### 1. Field of the Invention

The present invention relates to a touch probe for use on a coordinate positioning machine such as a machine tool or coordinate measuring machine.

Such probes are known from U.S. 4,153,998, and comprise a fixed structure by which the probe may be connected to the movable arm of the machine, relative to which a stylus having a measuring tip for contacting the workpiece is supported. The position of a workpiece surface is detected by operating the machine to drive the measuring tip of the stylus into contact with the surface whose position is to be measured, and detecting, with the probe, contact between the measuring tip and the surface. In order to prevent damage to the stylus when the movable arm continues to move after the measuring tip has contacted a surface, the stylus is carried on a stylus-supporting member which is supported on the fixed structure in a rest location out of which it may be displaced when a deflecting force is applied to the stylus, and to which it may return when the deflecting force is removed. This displacement of the stylus-supporting member is known as "overtravel displacement". Good positional repeatability of the stylus-supporting member relative to the fixed structure is required in order that the position of the surface may be measured accurately.

It is, on occasions, desirable to change the stylus carried by the probe. For example, the measurement of different features on a workpiece may require the use of different geometries and lengths of styli.

Systems for changing styli are known from e.g. U.S. 4,649,623 and EP406782 and comprise a retaining member on the stylus-supporting member, on which a stylus selected from a rack containing a number of different styli is magnetically retained. One stylus may be exchanged for another stylus in the rack by using an electro-magnet to neutralise the magnetic attraction forces between the retaining member and the stylus carried on the retaining member. Mutually engageable engagement elements on the retaining member and each stylus provide kinematic location of a given stylus on the retaining member, and thus good repeatability of the position of the measuring tip of each stylus relative to the retaining member from one stylus change operation to the next.

However, a fundamental problem with such systems is that mechanical hysteresis increases with the number of joints or support mechanisms which perform the function of locating the measuring tip relative to the fixed structure. Thus, for example, in the probe of U.S. 4,649,623 the stylus-supporting member is supported within the fixed structure in a kinematic rest position which provides overtravel displacement of the stylus during the course of a measuring operation, and a given stylus is supported on the stylus-supporting member in a kinematic location which is broken and reformed when a stylus is removed and replaced during the course of an inspection cycle.

EP 426492 discloses an analogue or measuring probe having magnetically retained and exchangeable styli; which, when the deflection limit of the probe is exceeded, self release.

A first aspect of the present invention provides a system 5 for changing styli on a probe in which one or more styli may be magnetically retained on a retaining member supported on the fixed structure of the probe, such that a single mechanical location between a given stylus and the retaining member performs both the function of locating the stylus on the retaining member during a stylus change operation, and providing overtravel displacement of the stylus during a measuring operation.

Accordingly, the present invention provides a touch probe for use on a coordinate positioning machine, comprising:
a fixed structure by which the probe may be supported on a movable arm of the machine;
a retaining member supported on the fixed structure;
a stylus having a supporting body, a stem extending from the supporting body, and a sensing tip provided at a free end of the stem;
means for releasably locating said supporting body in a repeatable rest position on said retaining member including magnetic biasing means for biasing said supporting body into said rest position, to enable exchange of one such stylus for another; characterised in that
said releasable location means enables tilting displacement of said supporting body and thus overtravel displacement of said stylus out of said rest position in response to a displacing force acting on the stylus during a measurement operation, and return of said supporting body to said rest position, under the influence of said magnetic biasing means when said displacing force is removed.

Embodiments of the present invention will be now be described, by way of example, and with reference to the accompanying drawings in which:
Fig 1 shows a section through a probe according to a first embodiment of the present invention;
Fig 2 shows a section on II-II in Fig 1;
Fig 3 shows the operation of the probe in Fig 1;
Fig 4 shows a detail of Fig 1 in conjunction with a rack;
Fig 5 shows a second embodiment of the present invention;
Fig 6 shows a detail of Fig 5 together with part of a rack;
Fig 7 shows an elevation on VII-VII in Figs 4 and 6 ; and
Fig 8 shows a perspective view of the rack of Figs 4 & 6;

### DESCRIPTION OF PREFERRED EMBODIMENTS

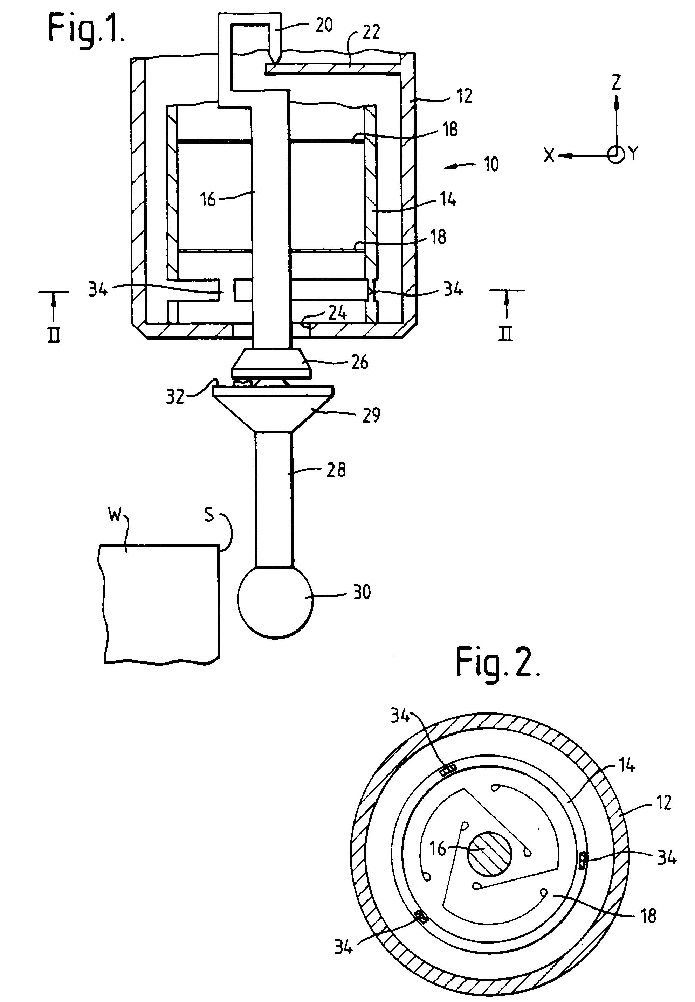

Referring now to Figs 1 and 2, a probe 10 has fixed structure provided by a cylindrical housing 12 inside which strain sensitive load cell in the form of a cylindrical cage 14 is supported. A retaining member 16 is supported within the cage 14 on two circular planar spring diaphragms 18, which restrict movement of the retaining member 16 to linear motion in a direction indicated in Fig 1 as the Z direction. The connection of the retaining member 16 and diaphragms 18 is such that the diaphragms 18 bias a stop 20 on the retaining member 16 into contact with an inwardly depending flange 22 which extends from the housing 12. When the stop 20 is in abutment with the flange 22, the position of the retaining member 16 is precisely fixed in space relative to the fixed structure 12; the diaphragms 18 restrict rotational movement of the retaining member 16, and the position of the member 16 in the Z direction is fixed by the stop 20. The retaining member 16 projects through an aperture 24 in the base of the housing 12, and terminates at its free end in a frusto-conical flange 26 onto which a stylus 28 is releasably mountable.

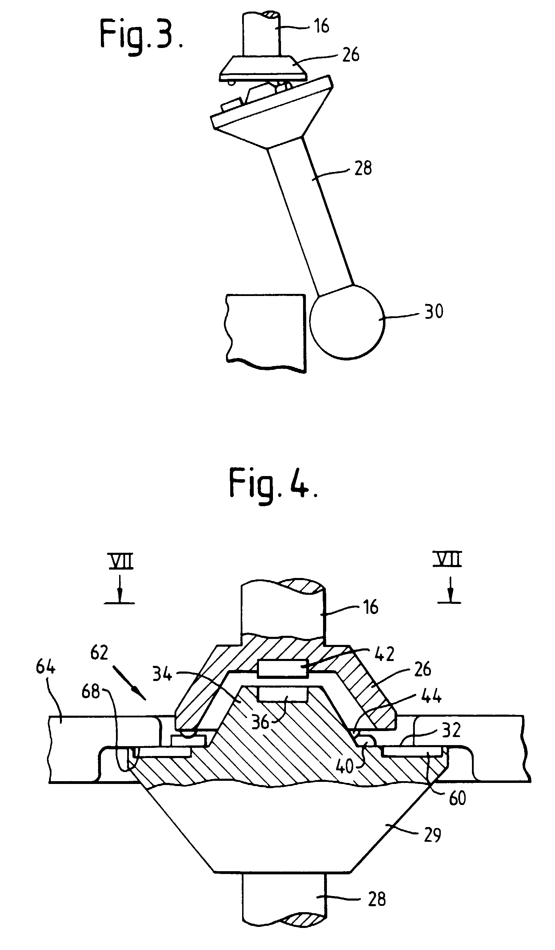

Referring now to Figs 3 and 4, the stylus 28 is mounted to a frusto-conical supporting body 29, and has a spherical sensing tip 30 at its free end. The supporting body 29 has a circular face 32, and a frusto-conical boss 34 projecting upwardly therefrom in which a permanent magnet 36 is mounted. Three rollers 40 are supported on the face 32, equispaced and radially extending with respect to the boss 34. The magnet 36 cooperates with a magnet 42, retained in a recess of the circular face 25 of the flange 26 to bias the stylus 28 into a mechanical location on the flange 26 of the retaining member 16. The mechanical location of the stylus 28 on the retaining member 16 is provided by engagement of each of the rollers 40 in the convergent surfaces provided by each of three pairs of balls 44 supported on the flange 26. The stylus 28 is thus kinematically supported on the flange 26 of the retaining member 16. The kinematic support provides good repeatability of the position of the stylus 28 relative to the retaining member 16; i.e. the stylus returns to the same position relative to the retaining member 16 after it has been displaced. Other forms of support which provide good repeatability may also be used.

The magnetic coupling between the retaining member 16 and the stylus 28 is such that the stylus 28 may be displaced from its kinematic rest position relative to the flange 26 (e.g. as illustrated in Fig 3), and the magnetic biasing force between the magnets 36,42 will bias the stylus 28 back into its kinematically supported condition on the flange 26. Thus, with this embodiment of probe the measuring tip 30 of the stylus 28 may deflect in three dimensions relative to the housing 12 to accommodate overtravel displacement by tilting movement of the stylus 28 in the X and Y directions relative to the retaining member 16, and movement of the retaining member relative to the housing 12 in the +Z direction, enabled by the resilience of the diaphragms 18.

The magnetic coupling also enables exchange of styli by operation of the machine in cooperation with a stylus rack, to completely remove a given stylus 28 from connection with flange 26, and subsequently to mount a further stylus 28. This design thus enables stylus-changing, but does not, as a result of this, increase the number of mechanical support mechanisms which serve to locate the measuring tip relative to the housing.

In a modification, the peripheries of the circular faces of both the flange 26 and supporting body 29 are made of ferromagnetic material to provide a magnetic flux path between flange 26 and body 29 at their peripheries. This increases the magnetic attraction forces between the stylus 28 and retaining member 16 when the probe is overtravelled and thus helps prevent the stylus 28 becoming completely disconnected. Preferably each of the peripheries is made of a permanent magnetic material.

During a measuring operation, the purpose of which is for example to measure the position of the surface S on a workpiece W, the probe 10 is driven in e.g. the X direction by a machine to which the probe is connected (not shown). At the instant the measuring tip 30 of the stylus 28 comes into contact with the surface S a strain will be present in the stylus 28 and the retaining member 16; the strain is transmitted by diaphragms 18 to the cage 14. Areas of weakness in the form of pillars 50 provided at the base of the cage 14 support strain gauges (not shown) which sense this strain and output a signal accordingly. When the output from the strain gauges has reached a predetermined threshold a signal is sent to the machine indicating contact between the measuring tip 30 and surface S, from which the machine may determine the position of the surface S. This signal is also used to brake motion of the machine. The cage and sensing mechanism are described in more detail in our U.S. Patent 4,813,151. Other strain sensing mechanisms e.g. piezo may be used. Overtravel of the probe relative to the workpiece W after the signal has been sent to the machine is, as mentioned above, accommodated by tilting deflection of the stylus 28 relative to the retaining member 16. The magnetic force between the retaining member 16 and the stylus 28 is however such that the stylus 28 remains partially supported thereon (as illustrated in Fig 3). When the machine has come to complete standstill, the probe is then driven in the reverse direction away from the surface S and the magnetic force between the receiving member 26 and the stylus 28 causes the stylus 28 to pivot back into position relative to the retaining member 16.

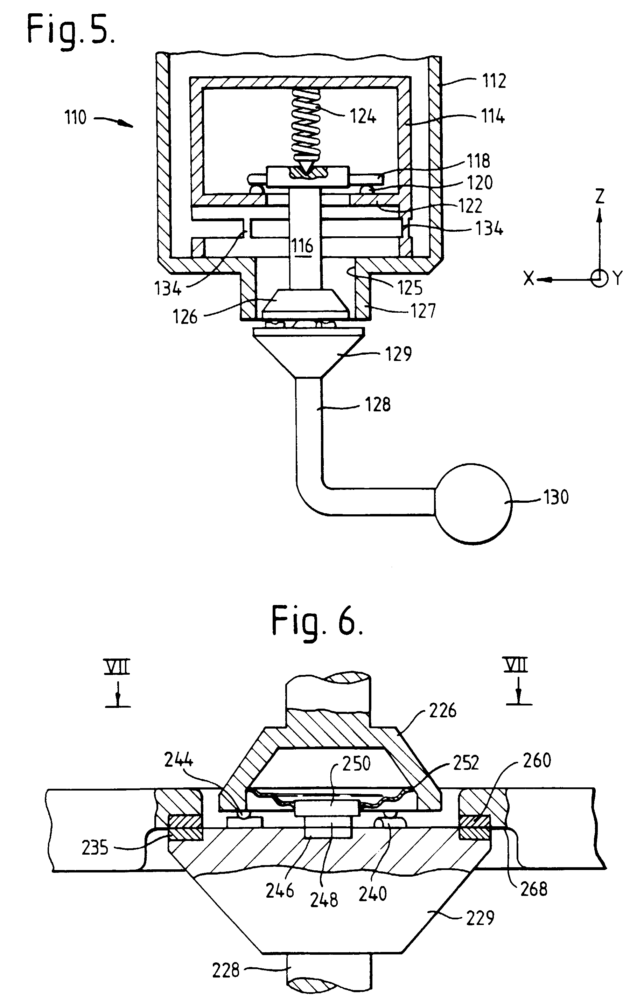

A second embodiment of probe according to the present invention is illustrated in Fig 5. A probe 110 has a fixed structure provided by a cylindrical housing 112 in which a strain-sensitive load cell in the form of a cylindrical cage 114 is supported. A retaining member 116 is supported in the cage 114 by three rollers 118 connected to the retaining member 116, equispaced, and radially extending with respect to axis A of the member 116. Each of the rollers 118 seat in the convergent surfaces defined by an adjacently positioned pair of balls 120 supported on an inwardly depending annular flange 122 of the cage 114, and a spring 124 biases the retaining members 116 into the kinematic location relative to the cage 114 defined by rollers 118 and balls 120. The retaining member 116 projects through an aperture 125 in the base of the housing 112, and terminates in frusto-conical flange 126, which lies within a bore defined by a downwardly depending skirt 127. A stylus 128, mounted on a supporting body 129, and having a spherical measuring tip 130 is releasably mountable on the retaining member 126; a magnetic coupling identical to the one illustrated and described with reference to Figs 3 and 4 being provided for this purpose.

As with the previous embodiment, when the machine is operated to bring sensing tip 130 into contact with a surface strain in the stylus 128 and the retaining member 116 is transmitted to the cage 114 causing strain gauges (not shown) thereon to output a signal which may be used to determine the position of the surface. Overtravel is initially accommodated by displacement of the retaining member 116; one or more of the rollers 118 lifting from its seat with the convergent surfaces provided by the pairs of balls 120. However, movement of the supporting member 116 is limited in the X-Y plane by the skirt 127, in order to protect the strain gauges from becoming damaged due to excessive overtravel of the probe (and thus excessive biasing force from spring 124). Any further overtravel of the probe beyond the point at which movement of the retaining member 116 in the X-Y plane is restricted by the skirt 127 is accommodated by partial breaking of the magnetic coupling between the flange 126 of retaining member 116, and the supporting body 129 of the stylus 128 (as in the first embodiment).

As can be seen from Fig 5, the stylus 128 has a stem configured to enable measurements to be made by driving the tip 130 against a surface in the +Z direction, so that the tip will move in the -Z direction relative to the probe housing 12. Such movement is also accommodated by the magnetic coupling, typically by tilting of supporting body 129 relative to retaining member 116. Thus, although the retaining member 116 is supported on the cage 114 via a mechanical location out of which it is operatively deflectable, the number of mechanical locations required to produce a probe capable of performing measurements in ±X,Y and Z directions, as well as stylus exchange operations has been reduced from three to two. In a modification of Fig 5 which achieves the same operational result, the retaining member 116 is fixedly connected to the housing 112 (via cage 114), the supporting body 129 is magnetically located on the retaining member 116, and the stylus is supported on the supporting body 129 in a repeatable rest position out of which it may be displaced.

An alternative embodiment of releasable magnetic coupling is illustrated in Fig 6 and comprises a supporting body 229 provided at the upper end of a stylus 128. The supporting body 229 has a circular face 232, which supports three rollers 240, equispaced and radially extending with respect to axis A of the stylus 228. The retaining member 216 has the form of a cup and supports three pairs of balls 244 which are positioned such that each of the rollers 240 may seat in the convergent surfaces defined by adjacent pairs of balls 244. The stylus 228 is releasably coupled to the retaining member 216 by a magnet 246 supported on supporting body 229 which attracts a further magnet 248 supported on the retaining member 216. The magnet 248 is supported on a block 250, which is in turn supported by a resilient diaphragm 252. Diaphragm 252 permits linear movement of the magnet 248 in a direction substantially parallel to the axis A, thus enabling the magnet 248 to come into contact with the magnet 246. With this arrangement therefore, the biasing force which causes the stylus 228 to return to its kinematic location with respect to tne retaining member 216 is provided by the diaphragm 252, while the retaining force between the retaining member 216 and the stylus 228 is provided by the magnets 246,248. It should be noted that either of the coupling mechanisms described in Figs 4 and 6 may be used with either of the probes described in Figs 1 and 5.

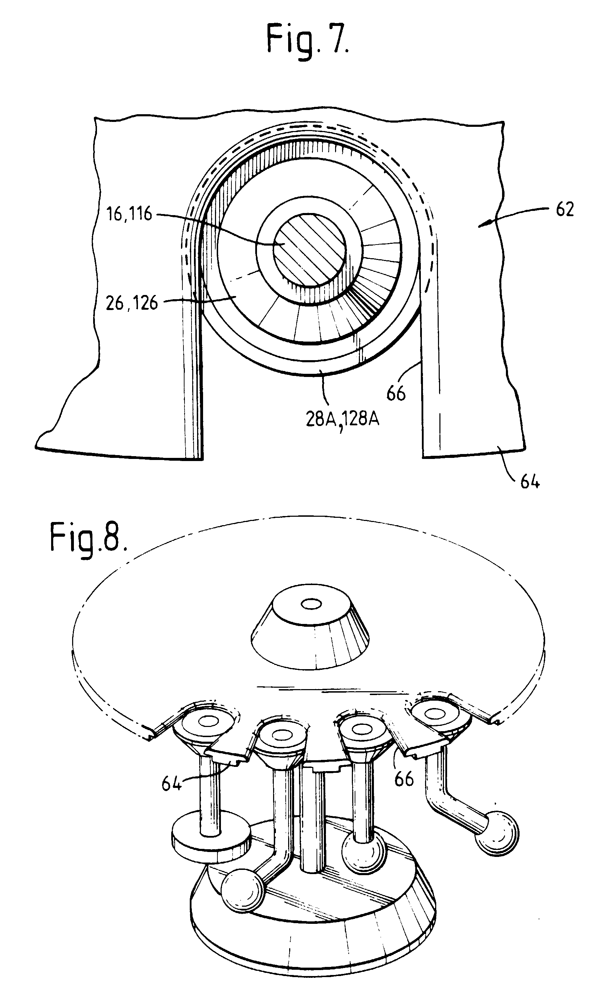

Magnetic coupling between a retaining member 26;116 and a stylus 28;128 enables the exchange of one stylus 28;128 for another during probe operation (for example to enable a measuring tip 30;130 to be brought into contact with different geometrical features on a workpiece). A system enabling exchange of styli on the retaining member 26;116 will now be described. Referring to Fig 7 and also to Fig 4, the support body 29 supports an annular magnet 60 on the periphery of its circular face. The magnet 60 retains the stylus 28 in a port 62 of a stylus rack 64 (also shown in Fig 8). The port 62 comprises a semi-circular aperture 66 whose radius is smaller than the radius of the face of the support body 29, thus enabling the support body 29 to be retained magnetically on the lower lip 68 of the aperture 66. The flange 26 of the retaining member 16 may nonetheless engage the support body 29 by virtue of the fact that the radius of the flange 26 is smaller than the radius of the semi-circular aperture 66. An exchange operation may be performed by driving the machine to move the retaining member 26 into engagement with the support body 29 so that each of the rollers 40 seats in the convergent surfaces defined by an adjacent pair of balls 44, and then continuing the downward movement until the magnet 60 no longer retains the retaining plate 28A in the port 62 of the rack 64.

An alternative but equivalent embodiment is described in Fig 6, and provides a magnet 260 on the rack. As with the previous embodiment, the rack comprises a plurality of ports each of which is provided by a semi-circular rim 268. The magnet 260 is supported on the lower lip of the rim 268 and the retaining plate is retained in the port by attraction of a ring 235 of ferromagnetic material at the periphery of the face of the support body 229 by the magnet 260. The exchange operation is as described previously. A detent mechanism may be provided to accurately locate the support body 229 with respect to the rack.

The racks and exchange operations may not be used with the design of Fig.5, due to the skirt 127.

In a modification, crash protection mechanisms may be provided to protect the support structure for the retaining member 16 such as are described in WO-A-91/13316.

## Claims

1. A touch probe for use on a coordinate positioning machine, comprising:
a fixed structure (12;112) by which the probe may be supported on a movable arm of the machine;
a retaining member (16;116) supported on the fixed structure (12;112);
a stylus (28;128) having a supporting body (29;129), a stem extending from the supporting body (29;129), and a sensing tip (30;130) provided at a free end of the stem;
means for releasably locating said supporting body (29;129) in a repeatable rest position on said retaining member (16;116) including magnetic biasing means (36;42) for biasing said supporting body (29;129) into said rest position, to enable exchange of one such stylus (28;128) for another;
characterised in that: said releasable location means enables tilting displacement of said supporting body (29;129) and thus overtravel displacement of said stylus out of said rest position in response to a displacing force acting on the stylus (28;128) during a measurement operation, and return of said supporting body (29;129) to said rest position, under the influence of said magnetic biasing means (36;42) when said displacing force is removed.

2. A touch probe according to claim 1 wherein both said retaining member (16;116) and said supporting body (29;129) have, when the supporting body is in the rest position, mutually confronting substantially circular faces, each having a periphery at least partially comprised of ferromagnetic material, and wherein said magnetic biasing means (36;42) provides, at said periphery, a magnetic flux path between the confronting faces of said retaining member and said supporting body.

3. A touch probe according to claim 2 wherein said ferromagnetic material extends around the entire periphery of each of said confronting faces.

4. A touch probe according to claim 1 wherein said retaining member is supported on said fixed structure on a strain sensitive load cell (14;114), for sensing strain in said stylus (28;128) responsive to contact between said sensing tip (30;130) and a surface prior to said displacement of said supporting body (29;129).

5. A touch probe according to claim 4, wherein said retaining member (16) is supported for linear motion along an axis relative to said load cell (14;114) on a pair of resilient planar diaphragms (18), spaced apart along said axis, each extending in a plane substantially orthogonal to said axis.

6. A touch probe according to claim 4 wherein said retaining member (16;116) is biased into a repeatable rest position on said fixed structure (12;112), out of which position said retaining member (16;116) is displaceable against the action of the biasing force, and to which position said retaining member (16;116) may return under the influence of said biasing force.

## Patentansprüche

1. Eine Berührungssonde zur Verwendung an einer Koordinatenpositioniermaschine mit:
einer festen Struktur (12; 112), durch welche die Sonde an einem bewegbaren Arm der Maschine abgestützt werden kann,
einem Halteglied (16; 116), das an der festen Struktur (12; 112) abgestützt ist,
einem Taster (28; 128) mit einem Stützkörper (29; 129), einem sich vom Stützkörper (29; 129) aus erstreckenden Stab und einer an einem freien Ende des Stabes vorgesehenen Wahrnehmungsspitze (30; 130),
Mitteln zum lösbaren Lokalisieren des Stützkörpers (29; 129) in einer wiederholbaren Ruheposition auf dem Halteglied (16; 116) mit magnetischen Vorspannmitteln (36; 42), die den Stützkörper (29; 129) in die Ruheposition vorspannen, um einen Austausch eines derartigen Tasters (28; 128) gegen einen anderen zu ermöglichen,
dadurch **gekennzeichnet,**
daß das lösbare Lokalisierungsmittel eine Kippverlagerung des Stützkörpers (29; 129) und somit eine Überbewegungsverlagerung des Tasters aus der Ruheposition in Abhängigkeit von einer auf den Taster (28; 128) während eines Meßvorgangs wirkenden Verlagerungskraft sowie eine Rückkehr des Stützkörpers (29; 129) in die Ruheposition unter dem Einfluß der magnetischen Vorspannmittel (36; 42) ermöglicht, wenn die Verlagerungskraft entfernt ist.

2. Eine Berührungssonde nach Anspruch 1,
worin sowohl das Halteglied (16; 116) als auch der Stützkörper (29; 129), wenn sich der Stützkörper in der Ruheposition befindet, wechselseitig gegenüberstehende, im wesentlichen kreisförmige Flächen aufweisen, die jeweils eine Peripherie aufweisen, welche wenigstens teilweise aus ferromagnetischem Material besteht, und worin das magnetische Vorspannmittel (36; 42) an der Peripherie einen magnetischen Flußweg zwischen den gegenüberstehenden Flächen des Haltegliedes und des Stützkörpers schafft.

3. Eine Berührungssonde nach Anspruch 2,
worin sich das ferromagnetische Material um die gesamte Peripherie von jeder der gegenüberstehenden Flächen erstreckt.

4. Eine Berührungssonde nach Anspruch 1,
worin das Halteglied auf der festen Struktur auf einer beanspruchungsempfindlichen Lastzelle (14; 114) abgestützt ist, um eine Beanspruchung im Taster (28; 128) als Antwort auf einen Kontakt zwischen der Wahrnehmungsspitze (30; 130) und einer Oberfläche vor der Verlagerung des Stützkörpers (29; 129) wahrzunehmen.

5. Eine Berührungssonde nach Anspruch 4,
worin das Halteglied (16) für eine lineare Bewegung längs einer Achse relativ zur Lastzelle (14; 114) auf einem Paar von elastischen ebenen Diaphragmen (18) abgestützt ist, die längs der Achse voneinander beabstandet sind und sich jeweils in einer zu der Achse im wesentlichen orthogonalen Ebene erstrecken.

6. Eine Berührungssonde nach Anspruch 4,
worin das Halteglied (16; 116) in eine wiederholbare Ruheposition auf der festen Struktur (12; 112) vorgespannt ist, wobei das Halteglied (16; 116) aus dieser Position gegen die Wirkung der Vorspannkraft verlagerbar ist und das Halteglied (16; 116) in diese Position unter dem Einfluß der Vorspannkraft zurückkehren kann.

## Revendications

1. Une sonde de contact pour utilisation sur une machine à positionner à coordonnées, comprenant:
une structure fixe (12; 112) grâce à laquelle la sonde peut être supportée sur un bras mobile de la machine;
un élément de retenue (16; 116) supporté sur la structure fixe (12; 112);
un stylet (28; 128) ayant un corps de support (29; 129), une tige s'étendant du corps de support (29; 129), et une pointe détectrice (30; 130) fournie à une extrémité libre de la tige;
un moyen pour positionner ledit corps de support (29; 129), de façon à pouvoir le dégager, dans une position de repos répétable sur ledit élément de retenue (16; 116) comportant un moyen d'inclinaison magnétique (36; 42) pour incliner ledit corps de support (29; 129) dans ladite position de repos, pour permettre l'échange de ce stylet (28; 128) pour un autre;
caractérisée en ce que: ledit moyen de positionnement dégageable permet le déplacement par basculement dudit corps de support (29; 129) et ainsi le déplacement par surcourse dudit stylet hors de ladite position de repos en réponse à une force de déplacement agissant sur le stylet (28; 128) pendant une opération de mesure et le retour dudit corps de support (29; 129) à ladite position de repos, sous l'influence dudit moyen d'inclinaison magnétique (36; 42) lorsque ladite force de déplacement est supprimée.

2. Une sonde de contact conformément à la revendication 1 dans quoi ledit élément de retenue (16; 116) tout comme ledit corps de support (29; 129) ont, lorsque le corps de support est dans la position de repos, des faces substantiellement circulaires mutuellement opposées, chacune ayant une périphérie au moins partiellement composée de matériau ferromagnétique, et dans quoi ledit moyen d'inclinaison magnétique (36; 42) fournit, à ladite périphérie, un trajet de flux magnétique entre les faces opposées dudit élément de retenue et dudit corps de support.

3. Une sonde de contact conformément à la revendication 2 dans quoi ledit matériau ferromagnétique s'étend autour de toute la périphérie de chacune desdites faces opposées.

4. Une sonde de contact conformément à la revendication 1 dans quoi ledit élément de retenue est supporté sur ladite structure fixe sur une cellule de charge sensible à la contrainte (14; 114), pour détecter la contrainte dans ledit stylet (28; 128) sensible au contact entre ladite pointe détectrice (30; 130) et une surface avant ledit déplacement dudit corps de support (29; 129).

5. Une sonde de contact conformément à la revendication 4 dans quoi ledit élément de retenue (16) est supporté pour un mouvement linéaire le long d'un axe relativement à ladite cellule de charge (14; 114) sur une paire de diaphragmes planaires élastiques (18), espacés le long dudit axe, chacun s'étendant dans un plan substantiellement orthogonal par rapport audit axe.

6. Une sonde de contact conformément à la revendication 4 dans quoi ledit élément de retenue (16; 116) est incliné dans une position de repos répétable sur ladite structure fixe (12; 112), ledit élément de retenue (16; 116) étant déplaçable de cette position contre l'action de la force d'inclinaison, et ledit élément de retenue (16; 116) pouvant retourner à cette position sous l'influence de ladite force d'inclinaison.
